# EUROPÄISCHE PATENTSCHRIFT

(11) **EP 0 624 057 B1**
(45) Veröffentlichungstag und Bekanntmachung des Hinweises auf die Patenterteilung: **22.04.1998**
(21) Anmeldenummer: 94901876.6
(22) Anmeldetag: 25.11.1993
(51) Int. Cl.: A01D 23/02

(54) **EIN- ODER MEHRREIHIGE RÜBENERNTEMASCHINE**
BETT LIFTER FOR ONE OR SEVERAL ROWS
ARRACHEUSE DE BETTERAVES EN UNE OU PLUSIEURS RANGEES

(30) Priorität: 30.11.1992 DE 4240203
(43) Veröffentlichungstag der Anmeldung: 17.11.1994
(73) Patentinhaber: Franz Kleine Maschinenfabrik GmbH & Co., D-33154 Salzkotten (DE)
(72) Erfinder: LÜHS, Herbert, D-33142 Büren-Brenken (DE)
(74) Vertreter: Rehberg, Elmar, Dipl.-Ing.
(86) Internationale Anmeldenummer: EP9303308
(87) Internationale Veröffentlichungsnummer: WO9412012

(56) Entgegenhaltungen:
- FR-E- 87 462
- GB-A- 851 717
- US-A- 1 351 287
- US-A- 2 663 986
- US-A- 3 583 136

## Beschreibung

Die Erfindung bezieht sich auf eine ein- oder mehrreihige Rübenerntemaschine, mit einem Häcksler zum Entfernen eines Teils des Rübenblatts und einer nachgeschalteten und gegebenenfalls ein Köpfmesser aufweisenden Abtrenneinrichtung für Blattstiele und tiefwachsende Rübenblätter, wobei ein rotierend angetriebenes und die Höhe der Abtrenneinrichtung steuerndes Tastrad vorgesehen ist. Die Erfindung bezieht sich auf einen Teil einer Rübenerntemaschine, der beispielsweise auch als gesonderte Anbaueinrichtung an einem Fahrzeug vorgesehen sein kann. Es geht insoweit um das Säubern der Rüben von Rübenblatt, Blattresten, Blattstielen, und gegebenenfalls überwachsendem Unkraut.

Eine Rübenerntemaschine der eingangs beschriebenen Art ist aus dem DE-U-82 17 281 bekannt. Es ist ein Häcksler vorgesehen, der um eine vertikal angeordnete Welle umlaufend schlegelnde Werkzeuge aufweist, mit denen ein Teil des Rübenblatts entfernt wird. Insoweit werden die hochwachsenden Blätter abgeschlagen und auf der in der Erde steckenden Rübe bzw. den Rübenkopf verbleiben Blattstiele und tiefwachsende Rübenblätter. Dem Häcksler ist eine Abtrenneinrichtung nachgeordnet, die ein Köpfmesser aufweist, zu dessen Höhensteuerung ein rotierend angetriebenes Tastrad vorgesehen ist. Das Tastrad ist höhenveränderlich geführt und läuft über die Rübenköpfe und Blattstiele hinweg, wobei es durch seine Lage die Höhe des Köpfmessers bestimmt, mit dessen Hilfe der Rübenkopf und die daran sitzenden Blattstiele und tiefwachsenden Rübenblätter abgeschnitten werden. Es ist eine mit nadelförmigen Mitnehmern ausgestattete Transporteinrichtung vorgesehen, die mit ihren Mitnehmern in den Rübenkopf einsticht und so für eine Mitnahme bzw. einen Abtransport der Rübenköpfe mit den daran sitzenden Blattstielen und tiefwachsenden Rübenblättern sorgt. Faulendes Rübenblatt, Unkraut u. dgl. läßt sich mit dem Köpfmesser schlecht schneiden. Es baut sich vielmehr an dem Köpfmesser auf und führt zu Verstopfungen. Auch zwischen den Rübenreihen wachsendes Unkraut wirkt sich in dieser Hinsicht nachteilig aus.

Aus der DE-OS 31 51 484 ist eine Rübenerntemaschine bekannt, deren Reinigungseinrichtung ebenfalls einen Häcksler aufweist, dessen Achse geneigt angeordnet ist, wobei sie mit der Horizontalebene in dem in Fahrtrichtung weisenden Bereich einen Winkel < 90° einschließt. Die Welle des Häckslers ist mit Schlegel besetzt. Am unteren Ende der Welle ist eine messerartig ausgebildete Köpfscheibe vorgesehen, die im Querschnitt gewölbte Gestalt besitzt und mit deren Hilfe hochwachsendes Rübenblatt, sofern es von den Schlegeln noch nicht erfaßt ist, abgetrennt wird. Eine Tastfunktion erfüllt diese Köpfscheibe nicht. Dem so gebildeten Häcksler ist eine Abtrenneinrichtung für Blattstiele und tiefwachsende Rübenblätter nachgeschaltet, die aus einem Köpfmesser und einem Schleiftaster besteht, wobei der Schleiftaster über die Blattstiele der Rübenköpfe hinwegläuft und das Köpfmesser in seiner Höhe so steuert, daß die Köpfdicke an der nachfolgenden Rübe immer von der Wuchshöhe der vorangehenden Rübe bestimmt wird. Auch hierbei besteht die Gefahr, daß sich tiefwachsendes Rübenblatt, Unkraut u. dgl. an dem Köpfmesser anhängt und dort aufbaut, so daß es zu Verstopfungen kommt.

Die FR-E-87 462 zeigt eine im Front- bzw. Heckanbau verwendbare Rübenköpfmaschine, deren Rahmen auf einer Stützrolle höheneinstellbar abgestützt ist, die sich ihrerseits auf dem Erdboden abstützt. Die Einstellung der Arbeitshöhe der Werkzeuge der Rübenköpfmaschine erfolgt über eine verdreh- und damit einstellbare Spindel. Der Rahmen der Rübenköpfeinrichtung ist mit einem schlegelndem Werkzeug besetzt. Dieses Werkzeug weist an einer horizontal gelagerten Welle angeordnete Schlegel auf, die die Aufgabe haben, hochwachsendes Rübenblatt abzuschlagen und über eine Querfördereinrichtung hinwegzufördern. Diesem schlegelnden Werkzeug kann ein Köpfmesser nachgeschaltet sein. Auch ist es möglich, ohne Verwendung eines Köpfmessers die Stiele sowie tiefwachsendes Rübenblatt zunächst durch eine angetriebene Walze zu bearbeiten, insbesondere umzuknicken, damit diese Stiele sowie tiefwachsendes Rübenblatt von einem zweiten schlegelnden Werkzeug mit vertikal angeordneter Drehachse leichter abgeschlagen werden können. In einer anderen Ausführungsform ist eine lediglich auf dem Boden abrollende Walze höhenbeweglich vorgesehen, die eine Mehrzahl von Scheiben mit spitzwinkligen Schneiden aufweist, die beim Überrollen der Rübe die Stiele sowie tiefwachsendes Rübenblatt zerschneiden, so daß die verbleibenden Teile des Rübenblattes von dem nachfolgenden zweiten schlegelnden Werkzeug mit vertikal angeordneter Drehachse leichter vom Kopf der Rübe entfernt werden können.

Aus der DE-OS 26 14 939 ist eine Rübenblatterntemaschine bekannt, bei der drehende Tasträder, deren Achse horizontal quer zur Fahrtrichtung ausgerichtet ist, zum Einsatz gelangen, um nachgeordnete Köpfmesser in der Höhe zu steuern und insoweit den Rübenkopf mit sämtlichen daran sitzenden Blättern abzuschneiden. Über zinkenartige Leitstäbe werden die abgeschnittenen Rübenköpfe mit den daran sitzenden Blättern von einem nachgeschalteten Häcksler erfaßt, kleingeschlagen und in eine Querfördereinrichtung übergeben. Hier besteht in erhöhtem Maße eine Verstopfungsgefahr für sich an den Köpfmessern ablagerndes und aufbauendes Rübenblatt.

Der Erfindung liegt die Aufgabe zugrunde eine Rübenerntemaschine der eingangs beschriebenen Art DE-U-82 17 281 bzw. einen Teil derselben aufzuzeigen, bei der ein Teil des Rübenblattes zunächst durch einen Häcksler entfernt wird und die verbliebenen Blattstiele sowie tiefwachsende Rübenblätter von den Rübenköpfen entfernt werden und so die Rüben in höherem Maße von Blatt gesäubert werden, als die bisher möglich war.

Erfindungsgemäß wird dies bei einer Rübenerntemaschine der eingangs beschriebenen Art dadurch erreicht, daß die Drehachse des Tastrades vertikal oder geneigt zur Horizontalebene angeordnet ist und daß das Tastrad zumindest auf einem Teil seiner Oberfläche mit Abtrennelementen für die Blattstiele und die tiefwachsenden Rübenblätter versehen ist.

Die Erfindung geht von dem Gedanken aus, den hochwachsenden Teil des Rübenblattes - wie bisher - von einem vorgeschalteten Häcksler entfernen zu lassen, jedoch mit einem nachgeschalteten Taster die Blattstiele und tiefwachsende Rübenblätter von dem Rübenkopf Zu entfernen. Dabei soll der Taster nicht nur - wie bisher - Tastfunktion erfüllen, sondern eine weitere Reinigungswirkung erfüllen. Blattstiele und tiefwachsende Rübenblätter sollen gezielt vom Rübenkopf abgetrennt werden, so daR eine erhöhte Säuberungs- oder Putzwirkung im Bereich der Rübenköpfe entsteht. Die erzielbare Abtrennwirkung für Blattstiele und tiefwachsende Rübenblätter ist derart überraschend, daß vorteilhaft auch ohne ein Abschneiden der Rübenköpfe mit Hilfe eines Köpfmessers gearbeitet werden kann. Andererseits können bei besonderen Anwendungsfällen dennoch Köpfmesser nachgeschaltet zum Einsatz gelangen, mit denen dann sauber geputzte Rübenköpfe abgeschnitten werden können, die beispielsweise zu Fütterungszwecken eingesetzt werden können, wobei faulendes Rübenblatt vorher von diesen Köpfen entfernt wurde.

Das Tastrad wird schnellaufend angetrieben. Es weist in den mit den Abtrennelementen besetzten Teilen Geschwindigkeiten auf, die deutlich schneller als die Fahrgeschwindigkeit der Rübenerntemaschine ist. Je nach Ausbildung des Tastrades können Umdrehungszahlen in der Größenordnung von 500-800 pro Minute angewendet werden.

Das Tastrad kann im Querschnitt durch seine Drehachse, also im Vertikalschnitt, gestreckte, gekrümmte, gewellte oder gekröpfte Form aufweisen. Die Form richtet sich auch nach der Anordnung seiner Achse und ist in allen Fällen so gestaltet, daß sowohl die Tastfunktion, wie auch die Abtrennfunktion erreicht wird. Die mit den Abtrennelementen besetzten Teile des Tastrades werden schräg schleifend über den Rübenkopf geführt, so daß die beabsichtigte Wirkung eintritt, wobei die Arbeitshöhe der Abtrennelemente unmittelbar während der Arbeit an der Rübe bestimmt wird.

Vorteilhaft ist es, wenn das Tastrad mit seiner geneigt zur Horizontalebene angeordneten Drehachse mit der Horizontalebene einen Winkel zwischen 45 und 75° in Gegenrichtung zur Fahrtrichtung einschließt. Durch diese Neigungsanordnung ergibt sich eine günstige Relativlage für die Tastwirkung einerseits und die Putzwirkung andererseits.

Dem Tastrad kann ein Köpfmesser zugeordnet sein, wobei beide Elemente in einem gemeinsamen Parallelogrammlenker oder an einem gemeinsamen Deichsellenker höhenveränderlich geführt werden können. Sofern die relative Höhe einstellbar ausgebildet ist, ergibt sich eine einstellbare Köpfdicke, die unabhängig von der Höhe, in der gearbeitet wird, konstant bleibt. Von hochwachsenden und niedrigwachsenden Rüben werden somit gleichdicke Kopfscheiben abgeschnitten. Bei Anlenkung an einem Deichsellenker wird die Köpfstärke kleiner, wenn das Tastrad nach oben schwenkt und umgekehrt. Hochstehende Rüben werden von dem Hächsler 2 schon teilweise geköpft und von den Abtrennelementen 13 vergleichsweise weniger nachgearbeitert. Tiefstehende Rüben werden vom Hächsler 2 im Bereich der Blattstiele bearbeitet und von den Abtrennelementen 13 stärker nachgearbeitet. Dies bedeutet eine gewisse Köpfdickenautomatik.

Das Köpfmesser kann rotierend angetrieben sein, um eine verbesserte Schneidwirkung zu erzielen. Dies ist in Verbindung mit dem vergleichsweise sauber geputzten Rübenkopf zu sehen, wobei eine geringe Köpfdicke Anwendung finden kann.

Köpfmesser einerseits und Tastrad andererseits können über getrennte Antriebe verfügen. Es ist jedoch sinnvoll, wenn das Köpfmesser in Abhängigkeit von dem Antrieb des Tastrades angetrieben wird, so daß beide Arbeitsgeschwindigkeiten gemeinsam in Relation zur Fahrtgeschwindigkeit gebracht werden können.

Als Abtrennelemente können Bürsten, Zinken, Leisten, Noppen o. dgl. vorgesehen sein. In all diesen Fällen handelt es sich um Vorsprünge, die als Formteile aus Gummi oder Kunststoff, aber auch aus Metall ausgebildet sein können. Da es sich um verschleißbehaftete Elemente handelt, sollten diese Abtrennelemente auswechselbar an dem Tastrad angeordnet sein. Es ist auch möglich, die Abtrennelemente ortsfest an einem Teil des Tastrades anzuordnen und dieses Teil auszuwechseln.

Die Höhenlage des Köpfmessers kann relativ zur Höhenlage des Tastrades einstellbar ausgebildet sein, um eine Köpfdickeneinstellung zu verwirklichen.

Die Erfindung wird anhand bevorzugter Ausführungsbeispiele weiter erläutert und beschrieben. Es zeigen:
- Figur 1: eine schematische Darstellung der für die Erfindung wesentlichen Teile an einem ersten Ausführungsbeispiel,
- Figur 2: eine schematische Darstellung einer weiteren Ausführungsform des Tastrades,
- Figur 3: ein Tastrad mit einem nachgeordneten Köpfmesser,
- Figur 4: eine weitere Ausführungsform des Tastrades,
- Figur 5: eine abgekröpfte Tastradausbildung,
- Figur 6: ein Tastrad mit leistenförmigen Abtrennelementen,
- Figur 7: ein abgewinkeltes Tastrad,
- Figur 8: eine weitere Ausführungsform des Tastrades und
- Figur 9: eine weitere Ausführungsform des Tastrades.

In den Figuren ist die Fahrt- bzw. Arbeitsrichtung durch einen Pfeil 1 gekennzeichnet. Die Rübenerntemaschine weist einen Häcksler 2 auf, der voranlaufend zu einem Tastrad 3 vorgesehen ist. Der Häcksler 2 besitzt eine Welle 4, deren Achse horizontal und quer zur Fahrtrichtung gemäß Pfeil 1 angeordnet ist. Die Welle 4 ist mit an ihr gelenkig aufgehängten Schlegeln 5 besetzt und wird beispielsweise gemäß Pfeil 6 im Uhrzeigersinn schnellaufend angetrieben. An den Rüben 7 wird das hochwachsende Rübenblatt 8 erfaßt und abgeschlagen, so daß nach dem Durchgang des Häckslers an der Rübe 7 nur noch Blattstiele 9 und tiefwachsendes Rübenblatt 10 vorhanden ist. Die vom Häcksler 2 abgeschlagenen Rübenblätter werden beispielsweise mittels einer nicht dargestellten Querfördereinrichtung von der Rübenreihe hinweggefördert.

Unmittelbar nach dem Häcksler 2 ist auf der Rübenerntemaschine das Tastrad 3 angeordnet. Es versteht sich, daß bei mehrreihigen Rübenerntemaschinen jeweils mehrere solche Kombinationen aus Häcksler 2 und Tastrad 3 vorgesehen sind. Das Tastrad 3 weist eine Achse 11 auf und besitzt einen Grundkörper 12, der hier schalenartig bzw. als Abschnitt einer Kugelschale ausgebildet ist. Der Grundkörper ist zumindest auf einem Teil seiner Oberfläche mit Abtrennelementen 13 versehen, die hier noppenartige Form besitzen und in entsprechender Verteilung auf der unteren Oberfläche des Grundkörpers 12 vorgesehen sind. Die Abtrennelemente können aus Gummi, Kunststoff oder Metall ausgebildet sein. Am besten haben sich leistenförmige Abtrennelemente 13 aus Stahl bewährt, die radial auf dem Grundkörper 12 angeordnet sind. Die Achse 11 ist in einem Winkel 14 geneigt angeordnet, der sich in einem Vertikalschnitt in Fahrtrichtung gemäß Pfeil 1 zwischen der Achse 11 und einer Horizontalebene 15 ergibt. Auf diese Weise kommt der am meisten wirksame äußere Umfangsbereich des Grundkörpers 12 in eine ausgezeichnete Relativlage zu den Köpfen der Rüben 7. Das Tastrad 3 wird schnellaufend angetrieben. Hierzu dient z. B. ein Hydromotor 16, der auf die Achse 11 einwirkt. Es versteht sich, das die aufgezeigten Elemente auf einem Rahmen oder sonstigen Teilen der Rübenerntemaschine gelagert sind. Diese Teile sind aus Übersichtlichkeitsgründen nicht dargestellt.

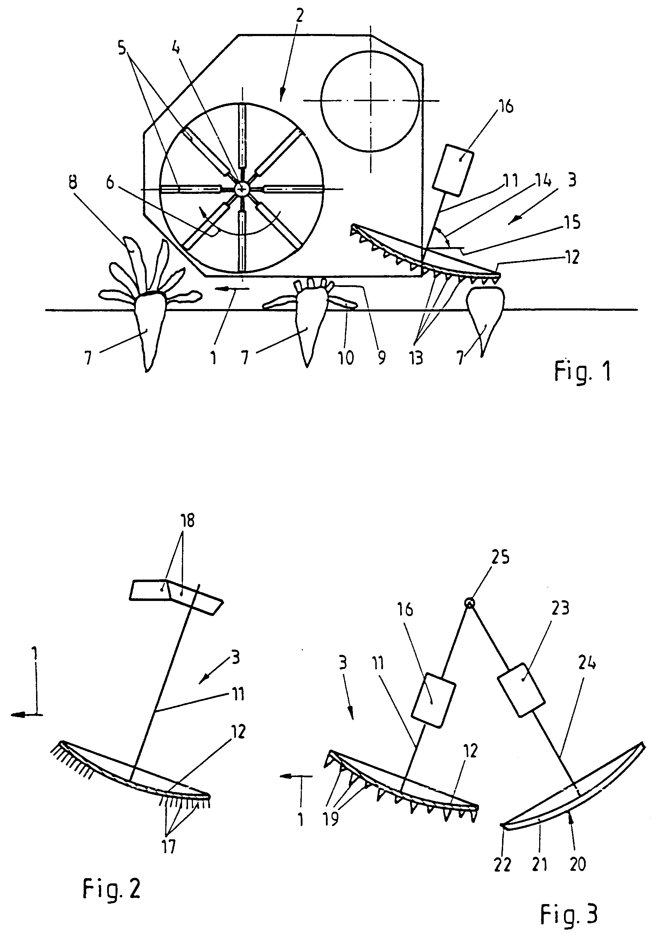

Figur 2 zeigt schematisch eine weitere Ausführungsmöglichkeit für das Tastrad 3, welches auch hier dem (nicht mehr dargestellten) Häcksler 2 nachgeschaltet ist. Der Grundkörper 12 ist in einem äußeren Ringbereich mit Borsten 17 besetzt. Zum Antrieb des Tastrades 3 dient eine Kegelradstufe 18, über die der Antrieb von einem anderen Element abgeleitet wird.

Bei der Ausführungsform gemäß Figur 3 ist der Grundkörper 12 des Tastrades 3 zunächst wieder als Kugelabschnitt ausgebildet. Seine nach unten gekehrte Oberfläche ist mit unterschiedlich weit abstehenden Vorsprüngen 19 versehen, die die Abtrennelemente bilden. Über den Hydromotor 16 erfolgt auch hier der Antrieb der Achse 11.

Dem Tastrad 3 ist ein Köpfmesser 20 zugeordnet, dessen Grundkörper 21 ebenfalls als Abschnitt einer Kugelschale ausgebildet ist, wobei jedoch der Rand 22 messerartig ausgebildet ist. Hier wird auch das Köpfmesser 20 rotierend angetrieben, wobei ein Hydromotor 23 auf die Achse 24 des Köpfmessers 20 einwirken kann. Die beiden Hydromotoren 16 und 23 können durch eine gemeinsame Ansteuerung 25 verbunden sein und damit in Abhängigkeit voneinander rotierend angetrieben werden.

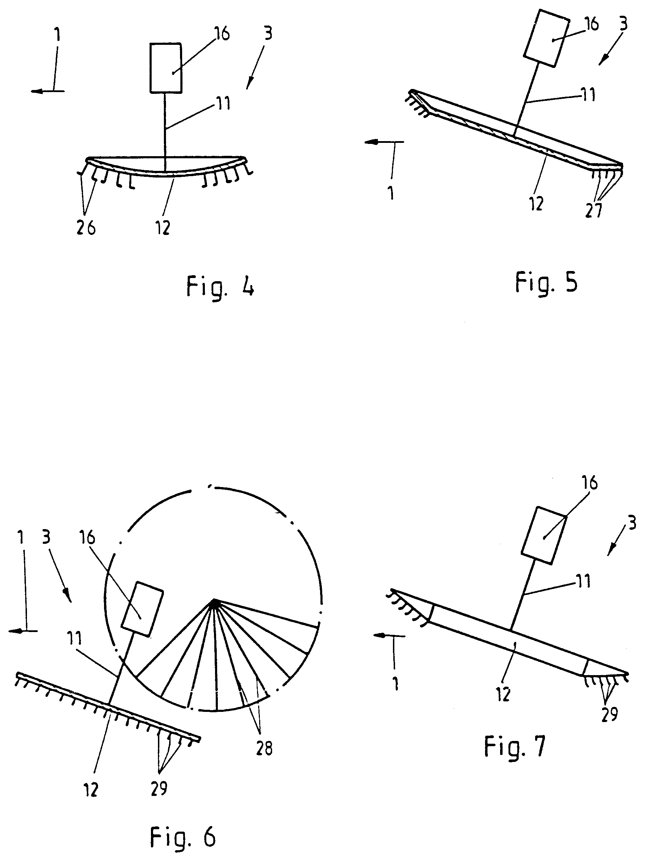

Figur 4 zeigt eine weitere Ausführungsform des Tastrades 3 mit Grundkörper 12, Achse 11 und Hydromotor 16. Die Achse 11 ist hier jedoch vertikal angeordnet, was in Verbindung mit einem schalenförmigen Grundkörper 12 den Vorteil ergibt, daß eine Tast- und Reinigungswirkung sowohl auf der aufsteigenden Seite des Rübenkopfes wie auch auf der absteigenden Seite erzielt wird. Auf der nach unten gekehrten Oberfläche des Grundkörpers 12 sind Haken 26 vorgesehen, die hier die Abtrennelemente bilden.

Bei der Ausführungsform gemäß Figur 5 besitzt der Grundkörper 12 des Tastrades 3 abgekröpfte Gestalt, wobei nur der äußere Bereich mit Fortsätzen 27 besetzt ist, die die Funktion der Abtrennelemente erbringen.

Das Ausführungsbeispiel der Figur 6 verdeutlicht einen im Querschnitt gestreckten Grundkörper 12, der mit radial angeordneten Leisten 28 besetzt ist, die als Abtrennelemente 13 wirken. Zur Verdeutlichung sind diese Abtrennelemente noch einmal in Draufsicht dargestellt.

Das in Figur 7 dargestellte Tastrad 3 besitzt einen Grundkörper 12 mit abgekröpfter Formgebung. Als Abtrennelemente sind Zinken 29 angeordnet.

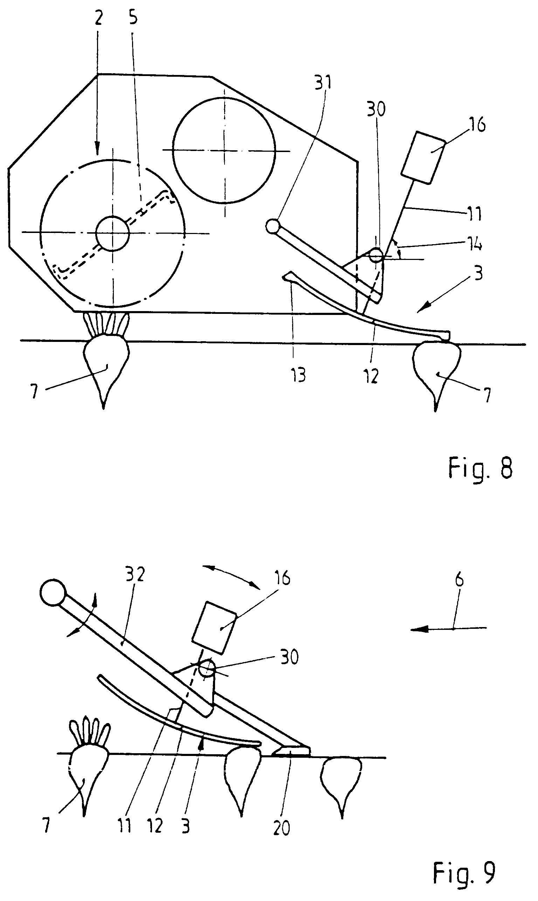

Bei der Ausführungsform gemäß Figur 8 erstrecken sich die Abtrennelemente 13 im wesentlichen radial zur Achse 11 auf dem äußeren Umfang des Grundkörpers 12. Sie können hier als Gummilappen, sich verjüngende Metalleisten o. dgl. ausgebildet sein. Die Achse 11 des Grundkörpers 12 ist um ein Lager 30 am Rahmen 31 schwenkbar aufgehängt, so daß durch eine Verschwenkung der Winkel 14 veränderlich eingestellt werden kann. Durch Veränderung des Winkels 14 der Achse 11 kann die Köpfstärke verändert werden; dies gilt insbesondere für sich verjüngende Abtrennelemente 13.

Bei der Ausführungsform gemäß Figur 9 ist dem Tastrad 3 ein Köpfmesser 20 nachgeordnet. Tastrad 3 und Köpfmesser 20 werden von einem Deichsellenker 32 geführt. Die Achse 11 des Tastrades 3 ist in dem Lager 30 schwenkbar aufgehängt. Der Vertikalabstand des Köpfmessers 20 von Rand des Tastrades 3, also die Köpfdicke, ist einstellbar. Mit dem Köpfmesser 20 wird nach dem Putzen durch das Tastrad 3 eine Kopfscheibe von der Rübe abgeschnitten.

### BEZUGSZEICHENLISTE

- 1 -: Pfeil
- 2 -: Häcksler
- 3 -: Tastrad
- 4 -: Welle
- 5 -: Schlegel
- 6 -: Pfeil
- 7 -: Rübe
- 8 -: hochwachsendes Rübenblatt
- 9 -: Blattstiele
- 10 -: tiefwachsendes Rübenblatt
- 11 -: Achse
- 12 -: Grundkörper
- 13 -: Abtrennelemente
- 14 -: Winkel
- 15 -: Horizontalebene
- 16 -: Hydromotor
- 17 -: Borsten
- 18 -: Kegelradstufe
- 19 -: Vorsprünge
- 20 -: Köpfmesser
- 21 -: Grundkörper
- 22 -: Rand
- 23 -: Hydromotor
- 24 -: Achse
- 25 -: Ansteuerung
- 26 -: Haken
- 27 -: Fortsätze
- 28 -: Leisten
- 29 -: Zinken
- 30 -: Lager
- 31 -: Rahmen
- 32 -: Deichsellenker

## Patentansprüche

1. Ein- oder mehrreihige Rübenerntemaschine, mit einem Häcksler (2) zum Entfernen eines Teils des Rübenblatts und einer nachgeschalteten Abtrenneinrichtung für Blattstiele (9) und tiefwachsende Rübenblätter (10), wobei ein rotierend angetriebenes und die Höhe der Abtrenneinrichtung steuerndes Tastrad (3) vorgesehen ist, **dadurch gekennzeichnet**, daß die Drehachse (11) des Tastrades (3) vertikal oder geneigt zur Horizontalebene (15) angeordnet ist und daß das angetriebene Tastrad (3) zumindest auf einem Teil seiner Oberfläche mit Abtrennelementen (13) für die Blattstiele (9) und die tiefwachsenden Rübenblätter (10) versehen ist.

2. Rübenerntemaschine nach Anspruch 1, **dadurch gekennzeichnet**, daß das Tastrad (3) schnellaufend angetrieben ist.

3. Rübenerntemaschine nach Anspruch 1 oder 2, **dadurch gekennzeichnet**, daß das Tastrad (3) im Querschnitt durch seine Drehachse (11) gestreckte, gekrümmte, gewellte oder gekröpfte Form aufweist.

4. Rübenerntemaschine nach einem der Ansprüche 1 bis 3, **dadurch gekennzeichnet**, daß das Tastrad (3) mit seiner geneigt zur Horizontalebene (15) angeordneten Drehachse (11) mit der Horizontalebene einen Winkel zwischen 45 und 75° in Gegenrichtung zur Fahrtrichtung einschließt.

5. Rübenerntemschine nach einem der Ansprüche 1 bis 4, **dadurch gekennzeichnet**, daß dem Tastrad (3) ein Köpfmesser (20) zugeordnet ist und beide in einem gemeinsamen Parallelogrammlenker oder an einem gemeinsamen Deichsellenker höhenveränderlich geführt sind.

6. Rübenerntemaschine nach Anspruch 5, **dadurch gekennzeichnet**, daß das Köpfmesser (20) rotierend angetrieben ist.

7. Rübenerntemaschine nach Anspruch 6, **dadurch gekennzeichnet**, daß das Köpfmesser (20) in Abhängigkeit von dem Antrieb des Tastrades (3) angetrieben ist.

8. Rübenerntemaschine nach Anspruch 1, **dadurch gekennzeichnet**, daß als Abtrennelemente (13) Bürsten, Zinken, Leisten, Noppen o. dgl. (17, 18, 26, 27, 28, 29) vorgesehen sind.

9. Rübenerntemaschine nach Anspruch 1 oder 8, **dadurch gekennzeichnet**, daß die Abtrennelemente (13) auswechselbar an dem Tastrad (3) angeordnet sind.

10. Rübenerntemaschine nach Anspruch 5, **dadurch gekennzeichnet**, daß die Höhenlage des Köpfmessers (20) relativ zur Höhenlage des Tastrades (3) einstellbar ausgebildet ist.

## Claims

1. A beet lifter for one or several rows comprising a chopper (2) for removal of a part of the beet leaf, a means of separation for petioles (9) and low-growing beat leaves (10) arranged behind and a rotatingly driven roller feeler (3) controlling the height of the separation elements (13), **wherein** the axis (11) of the roller feeler (3) is arranged vertically or incliningly with respect to the horizontal plane (15) and the driven roller feeler (3) comprises means of separation for the petioles (9) and the low-growing beet leaves (10) on at least one part of its surface.

2. The beet lifter according to claim 1, **wherein** the roller feeler (3) is driven at high-speed.

3. The beet lifter according to claim 1 or 2 **wherein**, the roller feeler (3) has in cross-section with respect to its axis (11) elongated, bent, wavy or bent at right angles shape.

4. The beet lifter according to one of the claims 1 to 3, **wherein** the roller feeler (3) with its with respect to the horizontal plane (15) incliningly arranged axis (11) encloses an angle between 45 and 75° with the horizontal plane opposite to the direction of motion.

5. The beet lifter according to one of the claims 1 to 4, **wherein** a topping knife (20) is assigned to the roller feeler (3) and both are mounted in common parallelogram arrangement or a shared steering bar so that their height is adjustable.

6. The beet lifter according to claim 5, **wherein** the topping knife (20) is rotatingly driven.

7. The beet lifter according to claim 6, **wherein** the topping knife (20) is driven depending on the actuation of the roller feeler (3).

8. The beet lifter according to claim 1, **wherein** the separation elements (13) are provided in form of bristles, tines, ribs, knobs and the like (17, 18, 26, 27, 28, 29).

9. The beet lifter according to claim 1 or 8, **wherein** the separation elements (13) are exchangeably mounted on the roller feeler (3).

10. The beet lifter according to claim 5, **wherein** the height of the topping knife (20) is adjustable with respect to the height of the roller feeler (3).

## Revendications

1. Arracheuse de betteraves en une ou plusieurs rangées, comportant une hacheuse (2) destinée à éliminer une partie de la feuille de betterave ainsi qu'un dispositif de séparation, monté en aval, pour les pétioles (9) et les feuilles de betteraves (10) basses, une roue de palpage (3) entraînée en rotation et commandant la hauteur du dispositif de séparation, étant prévue, caractérisée en ce que l'axe de rotation (11) de la roue de palpage (3) est vertical ou incliné par rapport au plan horizontal (15) et en ce que la roue de palpage (3) entraînée est pourvue, au moins sur une partie de sa surface, d'éléments de séparation (13) pour les pétioles (9) et les feuilles de betteraves (10) basses.

2. Arracheuse de betteraves selon la revendication 1, caractérisée en ce que la roue de palpage (3) est entraînée à une vitesse rapide.

3. Arracheuse de betteraves selon la revendication 1 ou 2, caractérisée en ce que la roue de palpage (3) présente, dans une vue en coupe transversale passant par son axe de rotation (11), une forme allongée, courbée, ondulée ou coudée.

4. Arracheuse de betteraves selon l'une des revendications 1 à 3, caractérisée en ce que la roue de palpage (3) forme un angle compris entre 45 et 75°, dans le sens contraire au sens de marche, entre son axe de rotation (11) incliné par rapport au plan horizontal (15) et le plan horizontal.

5. Arracheuse de betteraves selon l'une des revendications 1 à 4, caractérisée en ce qu'à la roue de palpage (3) est associée une lame de décolletage (20) et toutes deux sont guidées, de manière variable en hauteur, dans un parallélogramme articulé commun ou sur un bras d'attelage commun.

6. Arracheuse de betteraves selon la revendication 5, caractérisée en ce que la lame de décolletage (20) est entraînée en rotation.

7. Arracheuse de betteraves selon la revendication 6, caractérisée en ce que la lame de décolletage (20) est entraînée en fonction de l'entraînement de la roue de palpage (3).

8. Arracheuse de betteraves selon la revendication 1, caractérisée en ce que sont prévus, en tant qu'éléments de séparation (13), des brosses, des dents, des baguettes, des boutons ou similaires (17, 18, 26, 27, 28, 29).

9. Arracheuse de betteraves selon la revendication 1 ou 8, caractérisée en ce que les éléments de séparation (13) sont montés de manière interchangeable sur la roue de palpage (3).

10. Arracheuse de betteraves selon la revendication 5, caractérisée en ce que la position en hauteur de la lune de décolletage (20) est réglable par rapport à la position en hauteur de la roue de palpage (3).
